# FASCICULE DE BREVET EUROPEEN

(11) **EP 0 430 124 B1**
(45) Date de publication et mention de la délivrance du brevet: **19.04.1995**
(21) Numéro de dépôt: 90122518.5
(22) Date de dépôt: 26.11.1990
(51) Int. Cl.: G02B 6/42, G02B 6/36

(54) **Dispositif à double couplage optique, notamment pour système de transmission à fibres optiques**
Optisch doppelgekuppelte Vorrichtung, insbesondere für optisches Faserübertragungssystem
Optically double-coupled device, especially for fibre-optic transmission system

(30) Priorité: 30.11.1989 FR 8915804
(43) Date de publication de la demande: 05.06.1991
(73) Titulaire: ALCATEL CIT, 75008 Paris (FR)
(72) Inventeur: Mousseaux, Daniel, F-91120 Palaiseau (FR); Chevet, Bruno, F-91940 Les Ulis (FR); Monnot, Michel, F-91400 Orsay (FR); Grard, Emmanuel, F-91240 Saint Michel Sur Orge (FR)
(74) Mandataire: Weinmiller, Jürgen

(56) Documents cités:
- EP-A- 0 104 882
- EP-A- 0 133 394
- EP-A- 0 326 993
- US-A- 4 079 927
- US-A- 4 714 315
- US-A- 4 756 592

## Description

La présente invention concerne un dispositif assurant un couplage optique double d'un composant à des guides de lumière de faibles sections tel qu'on en rencontre dans un système de transmission à fibres optiques. Un dispositif connu de ce genre va tout d'abord être décrit. On va considérer pour cela qu'un tel dispositif s'étend d'une extrémité arrière à une extrémité avant selon une direction longitudinale (Z) et qu'il définit aussi des directions transversales qui sont une direction latérale (X) et une direction verticale (Y) relative à ce dispositif. Ce dispositif connu comporte les éléments suivants qui lui sont communs, quant à leurs fonctions indiquées ci-après, avec un dispositif selon la présente invention dans un mode particulier de réalisation de celle-ci :
- un guide arrière constitué par un tronçon de guide optique longitudinal présentant vers l'avant une extrémité interne permettant un couplage optique arrière,
- un support de guide arrière disposé sous ledit guide arrière et portant ce guide à proximité de sa dite extrémité interne,
- un composant optoélectronique présentant une plage de couplage arrière pour réaliser ledit couplage optique arrière, et une plage de couplage avant permettant un couplage optique avant,
- des conducteurs électriques pour fournir une énergie électrique audit composant optoélectronique,
- une embase de composant présentant une face supérieure portant ledit composant optoélectronique, cette embase étant constituée d'un matériau d'embase qui est thermiquement conducteur pour permettre l'évacuation d'une chaleur produite dans ce composant,
- des moyens d'action thermique, qui sont typiquement des moyens de refroidissement assurant une régulation thermique, et qui sont en liaison thermique avec ladite embase de composant pour réguler la température dudit composant,
- un guide avant constitué par un tronçon de guide optique longitudinal présentant vers l'arrière une extrémité interne pour réaliser ledit couplage optique avant,
- un support de guide avant disposé sous ledit guide avant et portant ce guide à proximité de sa dite extrémité interne,
- et des moyens de maintien maintenant lesdits supports de guide arrière et avant par rapport à ladite embase de composant pour maintenir lesdits couplages optiques arrière et avant.

Le rôle assuré par un tel dispositif est typiquement un rôle d'amplification : Un signal très affaibli par un long parcours guidé est reçu par une fibre constituant le guide arrière, et il est restitué avec une puissance fortement accrue dans une autre fibre constituant le guide avant. Ledit composant optoélectronique est alors typiquement un amplificateur optique semi-conducteur constitué d'une diode laser.

Le couplage optique d'une fibre à un tel composant est typiquement réalisé par l'intermédiaire d'une lentille formée sur l'extrémité de la fibre. Il nécessite d'abord un positionnement précis de cette extrémité par rapport à ce composant, puis une fixation de la fibre par rapport à l'embase qui porte ce dernier. Sa réalisation est particulièrement délicate quand il s'agit d'injecter de la lumière dans une fibre monomodale car la position réelle de la fibre doit alors s'écarter de moins de quelques centaines de nanomètres de la position optimale, au moins dans les directions transversales. Si elle s'en écarte davantage le rendement de couplage n'est pas acceptable. Un écart de 100 nm peut par exemple faire passer les pertes de couplage de 0 à 1 dB.

Des exemples peuvent être trouvés dans EP-A-326 993 ou US-A-4,714,315.

La présente invention a notamment pour but de permettre la réalisation d'un dispositif à double couplage tel que les deux couplages optiques y soient assurés avec un niveau de perte durablement faible.

Dans ce but elle a notamment pour objet un dispositif à double couplage optique comportant une embase de composant thermiquement conductrice pour porter un composant optoélectronique dont la température doit être régulée, ce dispositif comportant en outre deux supports de guides pour porter deux guides de lumière longitudinaux de part et d'autre de ce composant tout en couplant ce composant à ces deux guides, ce dispositif étant caractérisé par le fait que ladite embase de composant est fixée en contact thermique dans un réceptacle qui est constitué d'un matériau différent de celui de cette embase et qui présente deux faces d'appui transversales au contact de deux faces d'appui transversales des deux dits supports de guides pour faciliter un réglage des positions transversales de ces supports par rapport à ce réceptacle avant leur fixation à ce dernier.

Plus particulièrement, un dispositif selon cette invention comporte certains au moins des éléments communs précedemment mentionnés et, par rapport au dispositif connu précedemment mentionné, il est caractérisé par le fait que lesdits moyens de maintien comportent un réceptacle central qui forme un logement recevant ladite embase de composant, ce réceptacle comportant :
- un bloc d'assemblage arrière interne situé en arrière dudit logement, une face arrière transversale plane de ce bloc constituant une face d'appui arrière interne,
- un bloc d'assemblage avant interne situé en avant dudit logement, une face avant transversale plane de ce bloc constituant une face d'appui avant interne et ce bloc étant solidaire dudit bloc d'assemblage arrière interne,
- et des moyens de maintien d'embase pour appliquer une surface de contact de ladite embase de composant contre une surface de contact d'au moins un bloc récepteur qui est l'un des deux dits blocs d'assemblage arrière et avant internes, de manière à immobiliser cette embase par rapport audit réceptacle et, au moins dans certains cas, à réaliser un contact thermique entre cette embase et ce bloc récepteur,
- lesdits moyens d'action thermique étant disposés dans ces cas en liaison thermique indirecte avec ladite embase de composant par l'intermédiaire dudit bloc récepteur,
- ledit support de guide arrière étant un bloc d'assemblage arrière externe présentant une face avant transversale plane qui constitue une face d'appui arrière externe en appui mutuel avec ladite face d'appui arrière interne,
- ledit support de guide avant étant un bloc d'assemblage avant externe présentant une face arrière transversale plane qui constitue une face d'appui avant externe en appui mutuel avec ladite face d'appui avant interne,
- les quatre dits blocs d'assemblage étant constitués de matériaux d'assemblage rigides et soudables,
- des plots de soudure arrière étant réalisés au bord de l'une au moins des deux dites faces d'appui arrière pour souder ledit bloc d'assemblage arrière externe audit bloc d'assemblage arrière interne,
- et des plots de soudure avant étant réalisés au bord de l'une au moins des deux dites faces d'appui avant pour souder ledit bloc d'assemblage avant interne audit bloc d'assemblage avant externe.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue de dessus d'un ensemble fonctionnel d'un dispositif selon la présente invention.

La figure 2 représente à échelle agrandie un détail de la figure 1.

La figure 3 représente une vue en perspective d'un réceptacle central de ce dispositif avant assemblage.

La figure 4 représente une vue en perspective de l'ensemble fonctionnel de la figure 1 en cours d'assemblage.

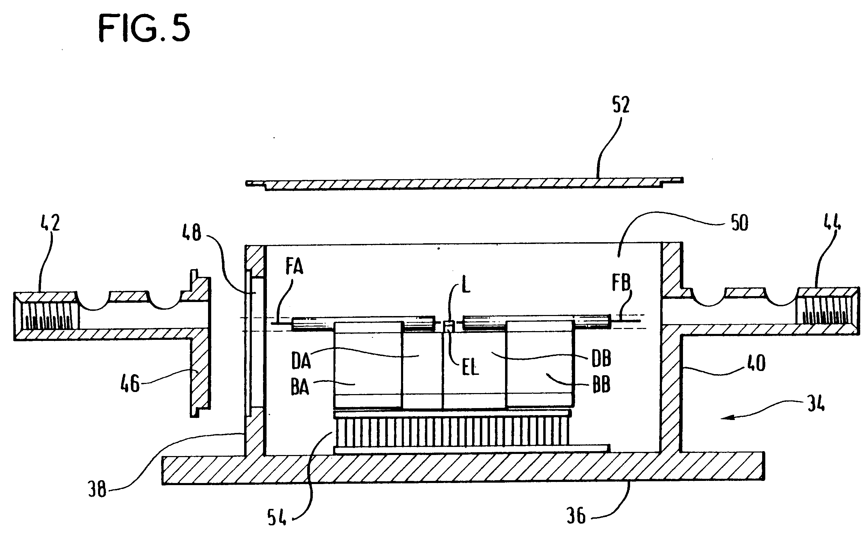

La figure 5 représente une vue de côté du même dispositif avec coupe axiale d'un boîtier de ce dispositif après assemblage du même ensemble fonctionnel et avant fixation d'un couvercle et d'un panneau rapporté de ce boîtier.

Sur ces figures lesdites directions longitudinale, latérale et verticale sont représentées en Z, X et Y, respectivement.

Lesdits guides sont des fibres arrière et avant représentées en FA et FB. Ces fibres sont entourées au voisinage desdits blocs d'assemblage, et sauf à leurs extrémités internes FAT et FBT, par deux tubes métalliques porte fibres TA et TB dans lesquelles elles sont fixées. Ces extrêmités ont été ramollies par chauffage pour former des surfaces dioptriques incurvées qui améliorent le couplage optique.

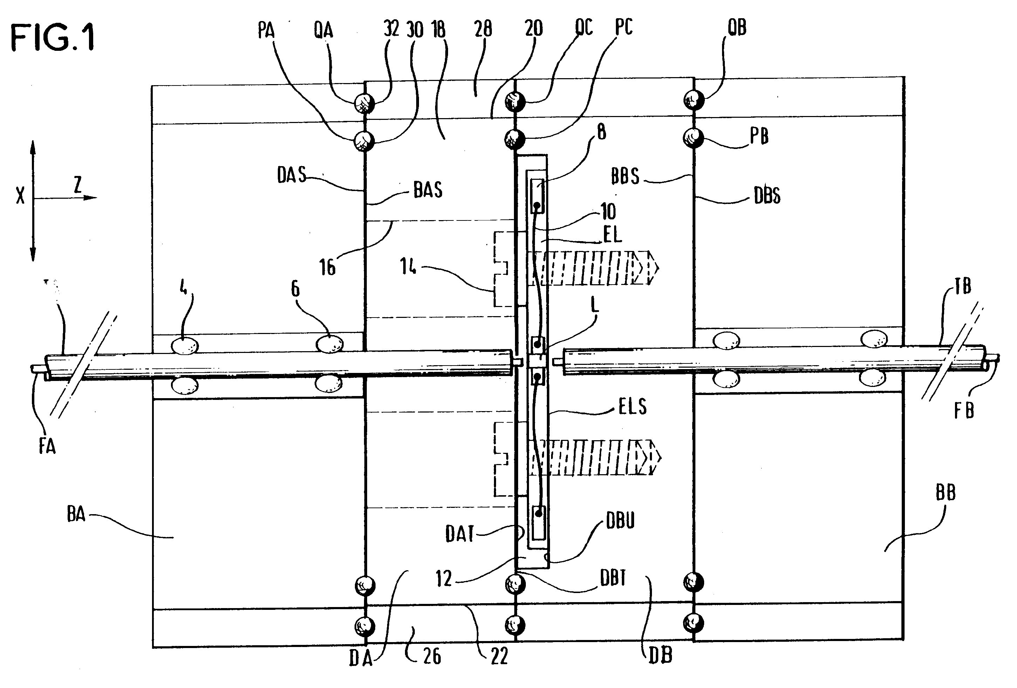

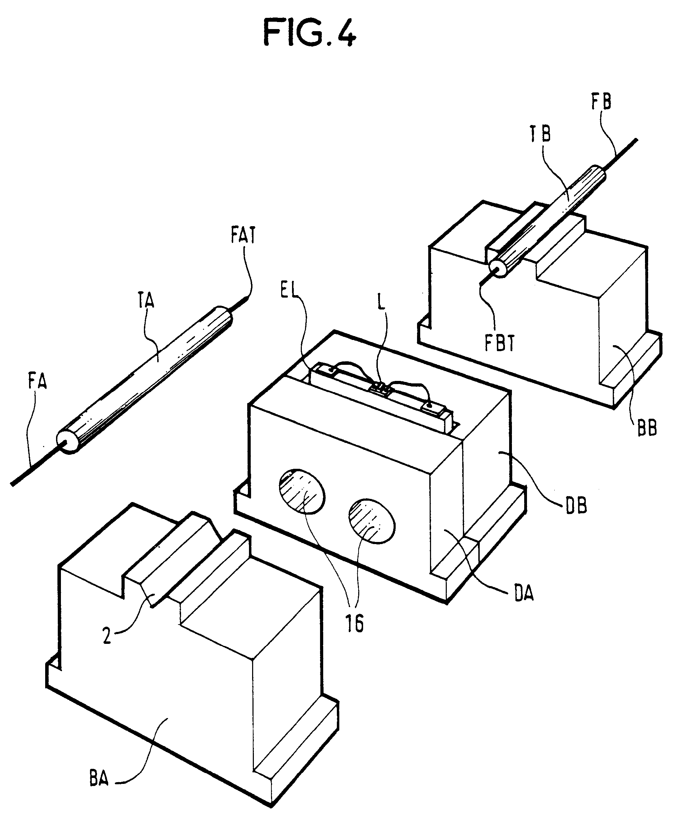

Chacun des deux tubes, TA ou TB, est disposé dans une rainure en Vé telle que 2 (Fig 4) qui est formée dans un bloc d'assemblage arrière externe BA ou avant externe BB. Il est fixé à ce bloc par quatre plots de soudure de fixation de fibre tels que 4 et 6 (Fig 1).

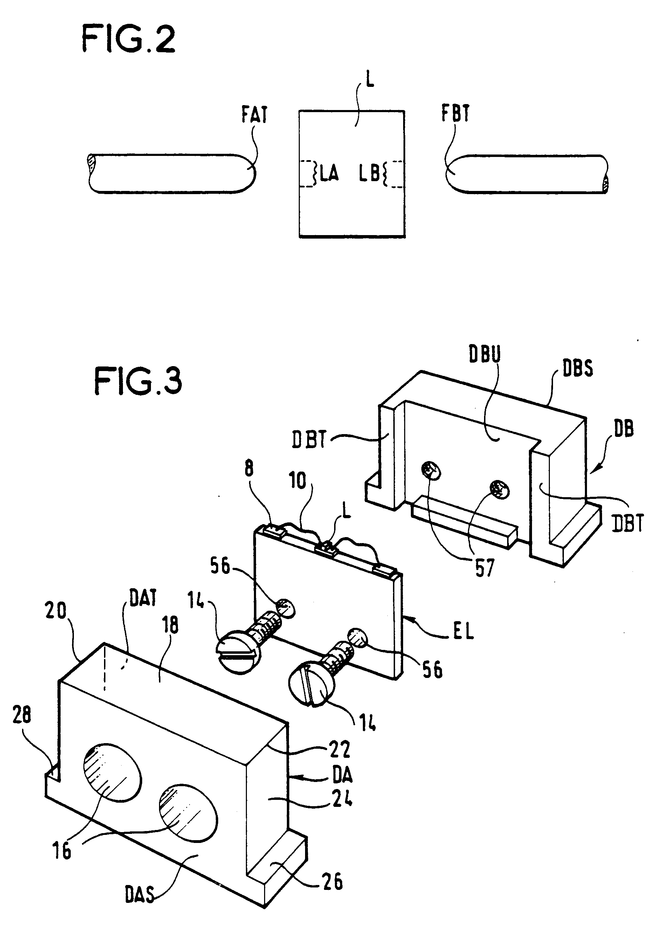

Ledit composant est un amplificateur optique semi-conducteur constitué par une diode laser L qui présente lesdites plages de couplage arrière LA ou avant LB (voir Fig 2) en regard des extrémités internes FAT et FBT. Il est monté sur une embase de composant EL et il est alimenté en énergie électrique, à partir de plages de connexion telles que 8 formées sur la même embase, par des fils conducteurs électriques fins tels que 10.

Cette embase est constituée d'un métal qui est thermiquement bon conducteur et qui facilite la fixation du composant optoélectronique et d'éléments accessoires, un tel métal étant typiquement le cuivre. Elle présente la forme d'une lame dont l'épaisseur, qui s'étend selon ladite direction longitudinale Z, est sensiblement égale à la longueur dudit composant optoélectronique L, c'est-à-dire à la distance entre ses plages de couplage qui s'étend également selon cette direction Z. Cette disposition présente l'avantage de faciliter une opération de traitement qui est effectuée sur les plages de couplage arrière et avant de ce composant alors que ce composant est déjà fixé sur cette embase. Ce traitement est typiquement un traitement optique multicouche antireflet.

Pour recevoir l'embase EL un logement 12 est formé dans un réceptacle central qui est constitué par les blocs d'assemblage internes arrière DA et avant DB.

Quoique, dans le dispositif donné en exemple, ce réceptable soit constitué par deux pièces distinctes qui forment les blocs DA et DB, il doit être compris qu'un tel réceptacle pourrait aussi être formé dans une pièce unique, par creusemement d'une telle pièce par électro-érosion . Dans ce dernier cas ce sont les deux parties de cette pièce unique qui sont situées en arrière et en avant au logement qui constitueraient les deux dits blocs d'assemblage arrière et avant internes.

L'une des faces principales de l'embase EL constitue une surface de contact ELS qui est plane et transversale et qui est appliquée contre une surface de contact correspondante DBU du bloc avant interne DB, ce dernier constituant ledit bloc récepteur.

On utilise pour cela au moins une vis, et de préférence deux vis telles que 14 qui se vissent en pénétrant longitudinalement dans des trous taraudés 57 de ce bloc récepteur. Avant l'assemblage des blocs BA et DA, les têtes de ces vis restent accessibles à travers des alésages longitudinaux tels que 16 formés dans le bloc DA.

Les blocs d'assemblage BA, DA, DB et BB sont des pièces massives constituées d'un même métal qui présente un faible coefficient de dilatation thermique, une haute température de fusion, une assez grande dureté et une faible déformabilité. Ce métal d'assemblage est par exemple un alliage Fe, Ni, Co. Le choix d'un tel matériau évite des déformations gênantes qui pourraient se produire lors de variations de température et/ou au cours du temps, notamment celles qui pourraient se produire lors de la formation des plots de soudure qui solidarisent ces blocs. Il permet aussi de réaliser des faces d'appui planes et polies qui peuvent glisser les unes contre les autres à frottement doux lors d'opérations de réglage de positions transversales.

Les indications données ci-dessus quant aux choix des matériaux d'embase et d'assemblage présentent, à la date de la présente invention, l'inconvénient que le coefficient de dilatation thermique du matériau d'assemblage apparaît devoir être en pratique plus faible que celui du matériau d'embase, ce qui, en cas de variations de température en service, provoque des dilatations différentielles. Mais, dans le cadre de cette invention, il semble actuellement préférable d'accepter cet inconvénient tout en diminuant son importance grâce à une régulation thermique convenable.

Chacun de ces blocs, tel que le bloc DA comporte :
- une face supérieure 18 formée entre deux bords latéraux 20, 22 qui s'étendent chacun selon la direction longitudinale Z et qui sont à distance l'un de l'autre selon la direction latérale X,
- deux faces latérales 24 qui s'étendent vers le bas selon la direction verticale relative Y à partir de ces deux bords latéraux, respectivement,
- et deux épaulements 26, 28 faisant saillie sur ces deux faces latérales selon la direction transversale X à distance de ces deux bords latéraux, respectivement.

Deux des plots de soudure tels que PA qui soudent ce bloc s'étendent sur une petite portion telle que 30 de la face supérieure 18 au voisinage des deux bords latéraux 20, 22, respectivement. Deux autres de ces plots de soudure tels que QA s'étendent sur une petite portion telle que 32 des deux épaulements 26, 28, respectivement. Ces plots de soudure peuvent ainsi être réalisés par des impulsions d'un faisceau d'un rayonnement énergétique se propageant toujours sensiblement selon ladite direction verticale relative. Ce rayonnement est par exemple fourni par un laser du type YAG.

Les plots de soudure ainsi réalisés sont des plots de soudure autogène c'est-à-dire qu'ils sont constitués par ledit métal d'assemblage qui a fondu localement sous l'impact dudit rayonnement énergétique.

Ces plots de soudure sont notamment des plots de soudure arrière tels que PA et QA formé respectivement sur les faces supérieures telles que 18 et sur les épaulements tels que 28 pour souder les blocs arrières BA et DA, et des plots de soudure avant tels que PB et QB pour souder les blocs avant BB et DB. Les dites faces d'appui telles que DAS et BAS ou DBS et BBS qui sont en appui mutuel sont sensiblement de mêmes formes, de mêmes dimensions et en coîncidence, et les plots de soudure tels que PA et QA ou PB et QB qui réunissent les deux blocs possédant deux telles faces s'étendent sur deux bords voisins appartenant à ces deux faces, respectivement.

Ledit logement recevant ladite embase de composant EL est formé dans l'un au moins, ici DB, des deux dits blocs d'assemblage arrière DA et avant DB internes,

Ces deux blocs présentent deux faces d'appui médianes planes transversales DAT, DBT en appui mutuel. Des plots de soudure médians PC, QC sont réalisés au bord de l'une au moins de ces deux faces d'appui médianes et de préférence à leur bord commun, pour souder le bloc d'assemblage arrière interne DA au bloc d'assemblage avant interne DB.

Le dispositif est réalisé dans un boîtier présentant :
- un fond 36 qui porte, au moins indirectement, un ensemble fonctionnel comportant les dits blocs d'assemblage BA, DA, DB, BB,
- et deux parois extrêmes, l'une 38 à une extrémité arrière, l'autre 40 à une extrémité avant de ce dispositif. Chacune de ces parois extrêmes est munie d'un queusot de fixation 42, 44 s'étendant longitudinalement vers l'extérieur pour fixer et porter l'une des fibres arrière et avant à distance de sa dite extrémité interne. L'une au moins de ces parois extrêmes, ici la paroi 38, est une paroi composite comportant un panneau rapporté 46 muni dudit queusot et obturant une ouverture 48 de cette paroi, de manière que ledit ensemble fonctionnel portant les fibres arrière et avant puisse être introduit dans le boîtier par cette ouverture lors de la réalisation du dispositif.

Ce boîtier présente encore deux parois latérales 50 et un couvercle rapporté 52.

Le fond 36 porte un organe de régulation thermique à effet Peltier 54 en forme de plaque horizontale. Cet organe constitue des moyens de refroidissement ou, plus généralement d'action thermique. Le réceptacle central DA, DB, est fixé en bon contact thermique sur cet organe.

Le dispositif qui vient d'être décrit est réalisé par un procédé qui constitue un objet de la présente invention et qui comporte les étapes principales suivantes :
- mise en appui mutuel des deux dites faces d'appui arrière BAS, DAS ainsi que les deux dites faces d'appui avant DBS, BBS,
- fixation de ladite fibre arrière FA, de ladite embase EL portant le composant optoélectronique L, et de ladite fibre avant FB, audit bloc d'assemblage arrière externe BA, audit réceptacle central DA, DB, et audit bloc d'assemblage avant externe BB, respectivement, ceci après réglage des positions longitudinales de ces fibres par rapport audit composant,
- réglage des positions transversales relatives de ladite fibre arrière FA, dudit composant optoélectronique L et de ladite fibre avant FB avec frottement mutuel desdites faces d'appui qui sont en appui mutuel, de manière à réaliser lesdits couplages optiques d'entrée et de sortie,
- et réalisation desdits plots de soudure arrière (PA, QA) et avant (PB, QB) par fusions localisées desdits matériaux d'assemblage sous l'impact d'impulsions brèves d'un rayonnement énergétique.

Les étapes de réglage de position et de réalisation consécutive de plots de soudure arrière et avant sont réalisées de préférence conformément au procédé d'alignement décrit dans la demande de brevet français 2 627 868.

De manière plus détaillée les premières opérations d'assemblage consistent à fixer le composant L et les fils 10 et tous autres éléments nécessaires sur l'embase EL qui est percée de deux trous 56 pour le passage des fûts des deux vis telles que 14.

On fixe ensuite cette embase au bloc DB à l'aide de ces vis qui viennent s'engager dans les deux trous taraudés 57 de ce bloc. On fixe aussi ce dernier au bloc DA grâce aux plots de soudure tels que PC et QC. On fait ensuite un réglage des positions longitudinales des fibres FA et FB sur les blocs BA et BB, par glissement des tubes TA et TB dans les rainures telles que 2, et on fait en même temps un réglage préliminaire de leurs positions transversales par déplacements transversaux de ces blocs. Ces blocs sont mis pour cela en appui, par lesdites faces d'appui arrière et avant, sur le réceptacle constitué par les blocs DA et DB. Ces réglages sont guidés par des mesures des couplages optiques. On fixe ensuite ces fibres sur ces blocs par les plots de soudure tels que 4 et 6.

On effectue ensuite le réglage définitif des positions transversales, toujours à l'aide de mesures des couplages optiques, et on réalise les plots de soudure arrière et avant, selon le procédé d'alignement précedemment mentionné.

Ces réglages et fixations sont effectués d'abord d'un côté du dispositif, par exemple du côté arrière, puis de l'autre, par exemple du côté avant.

Par ailleurs, l'organe de régulation thermique 54 a été fixé sur le fond du boîtier 36. L'ensemble fonctionnel qui est constitué par les blocs BA, DA, DB, BB et qui porte les fibres FA et FB ainsi que la diode L montée sur son embase EL est introduit dans ce boîtier par l'ouverture 48, la fibre avant FB étant introduite dans le queusot 44. On fixe cet ensemble sur l'organe 54 et cette fibre dans ce queusot, puis on met le panneau 46 en place, la fibre arrière FA étant introduite dans le queusot 42.

Ce panneau et cette fibre sont fixés, puis, après notamment la réalisation des connexions électriques, le couvercle 52.

On réalise ainsi facilement un dispositif compact qui assure de manière sûre et efficace le double couplage recherché tout en permettant au composant optoélectronique à coupler de fonctionner dans des conditions, notamment thermiques, sensiblement optimales.

## Revendications

1. Dispositif à double couplage optique, comportant une embase de composant (EL) thermiquement conductrice pour porter sur sa surface supérieure un composant optoélectronique (L) dont la température doit être régulée, ce dispositif comportant en outre deux supports de guides arrière et avant (BA, BB) pour porter deux guides de lumière longitudinaux (FA, FB) à l'arrière et à l'avant de ce composant tout en couplant ce composant à ces deux guides, ce dispositif étant caractérisé par le fait que ladite embase de composant (EL) est fixée en contact thermique entre deux parties arrière (DA) et avant (DB) d'un réceptable constitué d'un matériau différent de celui de cette embase, la surface extérieure de ce réceptacle comportant deux faces d'appui transversales (DAS, DBS) appartenant à ces deux parties et s'étendant au contact de deux faces d'appui transversales (BAS, BBS) appartenant aux deux dits supports de guides arrière (BA) et avant (BB), respectivement, de manière à faciliter un réglage des positions transversales de ces supports par rapport à ce réceptacle avant leur fixation à ce dernier.

2. Dispositif selon la revendication 1, notamment pour système de transmission à fibres optiques, ce dispositif s'étendant d'une extrémité arrière à une extrémité avant selon une direction longitudinale (Z) et définissant aussi des directions transversales qui sont une direction latérale (X) et une direction verticale (Y) relatives à ce dispositif, ce dispositif comportant :
- ledit guide arrière (FA) constitué par un tronçon de guide optique longitudinal présentant vers l'avant une extrémité interne (FAT) permettant un couplage optique arrière,
- ledit support de guide arrière disposé sous ledit guide arrière et portant ce guide à proximité de sa dite extrémité interne,
- un composant optoélectronique (L) présentant une plage de couplage arrière (LA) pour réaliser ledit couplage optique arrière, et une plage de couplage avant (LB) permettant un couplage optique avant,
- ladite embase de composant (EL) présentant une face supérieure portant ledit composant optoélectronique,
- un guide avant (FB) constitué par un tronçon de guide optique longitudinal présentant vers l'arrière une extrémité interne (FBT) pour réaliser ledit couplage optique avant,
- ledit support de guide avant disposé sous ledit guide avant et portant ce guide à proximité de sa dite extrémité interne,
- et ledit réceptacle central qui forme un logement (12) recevant ladite embase de composant, ce réceptacle comportant :
- un bloc d'assemblage arrière interne (DA) constituant ladite partie située en arrière, une face arrière transversale plane de ce bloc constituant une face d'appui arrière interne (DAS),
- un bloc d'assemblage avant interne (DB) constituant ladite partie avant, une face avant transversale plane de ce bloc constituant une face d'appui avant interne (DBS) et ce bloc étant solidaire dudit bloc d'assemblage arrière interne,
- et des moyens de maintien d'embase (14) pour appliquer une surface de contact (ELS) de ladite embase de composant contre une surface de contact (DBU) d'au moins un bloc récepteur (DB) qui est l'un des deux dits blocs d'assemblage arrière et avant internes, de manière à immobiliser cette embase par rapport audit réceptacle,
- ledit support de guide arrière étant un bloc d'assemblage arrière externe (BA) présentant une face avant transversale plane qui constitue une face d'appui arrière externe (BAS) en appui mutuel avec ladite face d'appui arrière interne,
- ledit support de guide avant étant un bloc d'assemblage avant externe (BB) présentant une face arrière transversale plane qui constitue une face d'appui avant externe (BBS) en appui mutuel avec ladite face d'appui avant interne,
- les quatre dits blocs d'assemblage étant constitués de matériaux d'assemblage rigides et soudables,
- des plots de soudure arrière (PA, QA) étant réalisés au bord de l'une au moins des deux dites faces d'appui arrière pour souder ledit bloc d'assemblage arrière externe audit bloc d'assemblage arrière interne,
- et des plots de soudure avant étant réalisés au bord de l'une au moins des deux dites faces d'appui avant pour souder ledit bloc d'assemblage avant interne audit bloc d'assemblage avant externe.

3. Dispositif selon la revendication 2, caractérisé par le fait que ladite embase de composant (EL) est constituée d'un matériau d'embase thermiquement conducteur,
- ledit dispositif comportant en outre des moyens d'action thermique (54) en liaison thermique avec ladite embase de composant (EL) pour évacuer une chaleur produite dans ledit composant et/ou réguler sa température,
- lesdits moyens de maintien d'embase (14) assurant un contact thermique entre ladite embase de composant et ledit bloc récepteur (DB),
- lesdits moyens d'action thermique (54) étant disposés en liaison thermique indirecte avec ladite embase de composant par l'intermédiaire dudit bloc récepteur.

4. Dispositif selon la revendication 3, caractérisé par le fait que ledit matériau d'embase est thermiquement plus conducteur que ledit matériau d'assemblage.

5. Dispositif selon la revendication 2, caractérisé par le fait que ladite embase de composant (EL) présente, selon ladite direction longitudinale (Z), une dimension sensiblement égale à celle dudit composant optoélectronique (L), selon cette direction.

6. Dispositif selon la revendiction 2, caractérisé par le fait que lesdites faces d'appui qui sont en appui mutuel (DAS, BAS) sont sensiblement de mêmes formes et dimensions et en coîncidence, chaque dit plot de soudure (PA) réunissant deux dits blocs d'un assemblage (BA, DA) qui possèdent deux telles faces s'étendant sur deux bords voisins appartenant à ces deux faces, respectivement.

7. Dispositif selon la revendication 2, caractérisé par le fait que lesdits plots de soudure (PA, QA, PB, QB) sont des plots de soudure autogène constitués par lesdits matériaux d'assemblage.

8. Dispositif selon la revendication 7, caractérisé par le fait que chacun desdits blocs d'assemblage (DA) comporte sensiblement :
- une face supérieure (18) formée entre deux bords latéraux (20, 22) qui s'étendent chacun selon ladite direction longitudinale (Z) et qui sont à distance l'un de l'autre selon ladite direction latérale (X),
- deux faces latérales (24) qui s'étendent vers le bas selon ladite direction verticale relative (Y) à partir des deux dits bords latéraux, respectivement,
- et deux épaulements (26, 28) faisant saillie sur les deux dites faces latérales selon ladite direction transversale (X) à distance des deux dits bords latéraux, respectivement,
- deux dits plots de soudure soudant ce bloc s'étendant sur une petite portion (30) de ladite face supérieure au voisinage des deux dits bords latéraux (20), respectivement,
- et deux dits de plots de soudure soudant ce bloc s'étendant sur une petite portion (32) des deux dits épaulements, respectivement, de manière que lesdits plots de soudure puissent être réalisés par des impulsions d'un faisceau d'un rayonnement énergétique se propageant toujours sensiblement selon ladite direction verticale relative.

9. Dispositif selon la revendication 2, caractérisé par le fait que ledit logement (12) recevant ladite embase de composant (EL) est formé dans l'un au moins (DB) des deux dits blocs d'assemblage arrière (DA) et avant (DB) internes, ces deux blocs étant constitués de deux pièces distinctes et présentant deux faces d'appui médianes planes transversales (DAT, DBT) en appui mutuel, respectivement, des plots de soudure médians (PC, QC) étant réalisés au bord de l'une au moins de deux dites faces d'appui médianes pour souder ledit bloc d'assemblage avant interne audit bloc d'assemblage arrière interne.

10. Dispositif selon la revendication 2, caractérisé par le fait que lesdits moyens de maintien de ladite embase de composant comportent au moins une vis (14) vissée dans ledit bloc récepteur (DB).

## Patentansprüche

1. Vorrichtung mit doppelter optischer Kopplung, die einen wärmeleitenden Bauteil-Sockel (EL) aufweist, um ein optoelektronisches Bauteil (L) zu tragen, dessen Temperatur geregelt werden muß, wobei diese Vorrichtung weiter zwei Träger (BA, BB) für einen vorderen bzw. hinteren Lichtleiter aufweist, um zwei Längs-Lichtleiter (FA, FB) vor und hinter diesem Bauteil zu tragen und zugleich dieses Bauteil an diese beiden Lichtleiter anzukoppeln, dadurch gekennzeichnet, daß der Bauteil-Sockel (EL) in Wärmekontakt zwischen einem hinteren (DA) und einem vorderen Teil (DB) eines Behälters befestigt ist, der aus einem anderen Material als dieser Sockel besteht, wobei die Außenfläche dieses Behälters zwei Quer-Auflageflächen (DAS, DBS) besitzt, die zu diesen beiden Teilen gehören und in Kontakt mit zwei Quer-Auflageflächen (BAS, BBS) stehen, die zu den beiden Lichtleiterträgern (BA, BB) gehören, um eine Regulierung der Querpositionen dieser Träger in Bezug auf diesen Behälter zu erleichtern, bevor sie an letzterem befestigt werden.

2. Vorrichtung nach Anspruch 1, insbesondere für ein Übertragungssystem mit Lichtleitfasern, wobei diese Vorrichtung sich von einem hinteren Ende zu einem vorderen Ende gemäß einer Längsrichtung (Z) erstreckt und auch Querrichtungen definiert, die eine relative seitliche Richtung (X) und eine relative senkrechte Richtung (Y) dieser Vorrichtung sind, wobei diese Vorrichtung aufweist:
- den hinteren Lichtleiter (FA), der aus einem Lichtleiter-Längsabschnitt besteht, der nach vorne hin ein Innenende (FAT) aufweist, das eine hintere optische Kopplung erlaubt,
- den hinteren Lichtleiterträger, der unter dem hinteren Lichtleiter angeordnet ist und diesen Lichtleiter in der Nähe seines Innenendes trägt,
- ein optoelektronisches Bauteil (L), das einen hinteren Kopplungsbereich (LA), um die hintere Kopplung durchzuführen, und einen vorderen Kopplungsbereich (LB) aufweist, der eine vordere Kopplung ermöglicht,
- wobei der Bauteil-Sockel (EL) eine Oberseite aufweist, die das optoelektronische Bauteil trägt,
- einen vorderen Lichtleiter (FB), der aus einem Lichtleiter-Längsabschnitt besteht, der nach hinten ein inneres Ende (FBT) aufweist, um die vordere optische Kopplung durchzuführen,
- den vorderen Lichtleiterträger, der unter dem vorderen Lichtleiter angeordnet ist und diesen Lichtleiter in der Nähe seines inneren Endes trägt,
- und den zentralen Behälter, der einen Sitz (12) bildet, der den Bauteil-Sockel aufnimmt, wobei dieser Behälter aufweist:
- einen inneren hinteren Montageblock (DA), der den hinteren Teil bildet, wobei eine hintere ebene Querfläche dieses Blocks eine innere hintere Auflagefläche (DAS) bildet,
- einen inneren vorderen Montageblock (DB), der den vorderen Teil bildet, wobei eine vordere ebene Querfläche dieses Blocks eine innere vordere Auflagefläche (DBS) bildet und dieser Block fest mit dem inneren hinteren Montageblock verbunden ist,
- und Mittel (14) zum Halten des Sockels, um eine Kontaktfläche (ELS) des Bauteil-Sockels gegen eine Kontaktfläche (DBU) mindestens eines Empfangsblocks (DB) anzulegen, der einer der beiden inneren Montageblöcke ist, um diesen Sockel in Bezug auf den Behälter festzusetzen,
- wobei der hintere Lichtleiterträger ein äußerer hinterer Montageblock (BA) ist, der eine ebene vordere Querfläche aufweist, die eine äußere hintere Auflagefläche (BAS) an der inneren hinteren Auflagefläche bildet,
- wobei der vordere Lichtleiterträger ein äußerer vorderer Montageblock (BB) ist, der eine hintere ebene Querfläche aufweist, die eine äußere vordere Auflagefläche (BBS) an der vorderen inneren Auflagefläche bildet,
- wobei die vier Montageblöcke aus steifen und schweißbaren Montagematerialien bestehen,
- wobei hintere Schweißpunkte (PA, QA) am Rand mindestens einer der beiden hinteren Auflageflächen liegen, um den äußeren hinteren Montageblock an den inneren hinteren Montageblock anzuschweißen,
- während vordere Schweißpunkte am Rand mindestens einer der beiden vorderen Auflageflächen liegen, um den inneren vorderen Montageblock an den äußeren vorderen Montageblock anzuschweißen.

3. Vorrichtung nach Anspruch 2, dadurch gekennzeichnet, daß der Bauteil-Sockel (EL) aus einem wärmeleitenden Sockelmaterial besteht,
- wobei die Vorrichtung weiter thermisch wirksame Mittel (54) in Wärmekontakt mit dem Bauteil-Sockel (EL) aufweisen, um eine im Bauteil erzeugte Wärme abzuführen und/oder seine Temperatur zu regeln,
- wobei die Mittel zum Halten des Sockels (14) einen Wärmekontakt zwischen dem Bauteil-Sockel und dem Empfangsblock (DB) bewirken,
- wobei die thermisch wirksamen Mittel (54) mit dem Bauteil-Sockel über den Empfangsblock in indirektem Wärmekontakt stehen.

4. Vorrichtung nach Anspruch 3, dadurch gekennzeichnet, daß das Sockelmaterial stärker wärmeleitend ist als das Montagematerial.

5. Vorrichtung nach Anspruch 2, dadurch gekennzeichnet, daß der Bauteil-Sockel (EL) in Längsrichtung (Z) im wesentlichen genauso groß ist wie das optoelektronische Bauteil (L).

6. Vorrichtung nach Anspruch 2, dadurch gekennzeichnet, daß die Auflageflächen (DAS, BAS), die aufeinanderliegen, im wesentlichen die gleiche Form und Größe aufweisen und deckungsgleich sind, wobei jeder Schweißpunkt (PA) zwei Montageblöcke (BA, DA) verbindet, die zwei solche Flächen besitzen, welche sich auf zwei benachbarten Rändern erstrecken, die je zu einer dieser beiden Flächen gehören.

7. Vorrichtung nach Anspruch 2, dadurch gekennzeichnet, daß die Schweißpunkte (PA, QA, PB, QB) autogene Schweißpunkte sind, die aus dem Montagemetall bestehe.

8. Vorrichtung nach Anspruch 7, dadurch gekennzeichnet, daß jeder der Montageblöcke (DA) im wesentlichen aufweist:
- eine Oberseite (18), die zwischen zwei Seitenrändern (20, 22) ausgebildet ist, die sich je in Längsrichtung (Z) erstrecken und die in Seitenrichtung (X) einen Abstand aufweisen,
- zwei Seitenflächen (24), die sich gemäß der relativen senkrechten Richtung (Y) ausgehend von diesen zwei Seitenrändern nach unten erstrecken,
- und zwei Schultern (26, 28), die auf diese beiden Seitenflächen gemäß der Querrichtung (X) entfernt von diesen beiden Seitenrändern vorspringen,
- zwei Schweißpunkte, die diesen Block anschweißen und über eine kleine Zone (30) der Oberfläche in der Nähe der beiden Seitenränder (20) liegen,
- und zwei diesen Block anschweißende Schweißpunkte, die in einer kleinen Zone (32) der beiden Schultern liegen, so daß diese Schweißpunkte durch Impulse eines Strahls einer energiereichen Strahlung hergestellt werden können, die sich immer im wesentlichen gemäß der relativen senkrechten Richtung ausbreitet.

9. Vorrichtung nach Anspruch 2, dadurch gekennzeichnet, daß der den Bauteil-Sockel (EL) aufnehmende Sitz (12) in mindestens einem der beiden Montageblöcke (DA, DB) ausgebildet ist, wobei diese beiden Blöcke aus zwei getrennten Teilen bestehen und zwei mittlere ebene Quer-Auflageflächen (DAT, DBT) aufweisen, die aufeinanderliegen, wobei mittlere Schweißpunkte (PC, QC) am Rand mindestens einer der mittleren Auflagefläche ausgeführt sind, um den inneren vorderen Montageblock an den inneren hinteren Montageblock anzuschweißen.

10. Vorrichtung nach Anspruch 2, dadurch gekennzeichnet, daß die Haltemittel des Bauteil-Sockels mindestens eine Schraube (14) aufweisen, die in den Empfangsblock (DB) geschraubt ist.

## Claims

1. A device for providing two optical couplings, the device comprising a thermally conductive component base (EL) for carrying on its top surface an opto-electronic component (L) whose temperature is to be regulated, said device further including two waveguide supports (BA, BB), namely a rear waveguide support and a front waveguide support, for carrying two longitudinal light.waveguides (FA, FB) one at the rear and one at the front of the component and for coupling said component to said two waveguides, the device being characterized by the fact that said component base (EL) is fixed in thermal contact between two portions, namely a rear portion (DA) and a front portion (DB), of a receptacle constituted by a material different from that of said base, the outside surface of said receptacle including two transverse bearing faces (DAS, DBS) belonging to said two portions and extending in contact with two transverse bearing faces (BAS, BBS) belonging respectively to said front and rear waveguide supports (BA, BB), in a manner facilitating adjustment of the transverse positions of said supports relative to said receptacle prior to fixing them thereto.

2. A device according to claim 1, in particular an optical fiber transmission system, said device extending from a rear end to a front end along a longitudinal direction (Z) and also defining transverse directions relative to said device, said directions comprising a lateral direction (X) and a vertical direction (Y), said device comprising:
said rear waveguide (FA) constituted by a length of longitudinal light waveguide having an inner end (FAT) towards the front for performing rear optical coupling;
said rear waveguide support disposed beneath said rear waveguide and carrying said waveguide close to its said inner end;
an opto-electronic component (L) having a rear coupling surface (LA) for performing said rear optical coupling, and a front coupling surface (LB) for front optical coupling;
said component base (EL) having a top face supporting said opto-electronic component;
a front waveguide (FB) constituted by a length of longitudinal light waveguide having an inner end (FBT) towards the rear for performing said front optical coupling;
said front waveguide support disposed beneath said front waveguide and carrying said waveguide close to its said inner end; and
said central receptacle which forms a recess (12) receiving said component base, said receptacle comprising:
an inner rear assembly block (DA) constituting said rear portion, a plane transverse rear face of said block constituting an inner rear bearing face (DAS);
an inner front assembly block (DB) constituting said front portion, a plane transverse front face of said block constituting an inner front bearing face (DBS) and said block being fixed to said inner rear assembly block; and
base holding means (14) for pressing a contact surface (ELS) of said component base against a contact surface (DBU) of at least one receiver block (DB) which is one of said rear and front inner assembly blocks, thereby fixing said base relative to said receptacle;
said rear waveguide support being an outer rear assembly block (BA) having a plane transverse front face which constitutes an outer rear bearing face (BAS) bearing against said inner rear bearing face;
said front waveguide support being an outer front assembly block (BB) having a plane transverse rear face which constitutes an outer front bearing face (BBS) bearing against said inner front bearing face;
all four said assembly blocks being made of rigid and weldable assembly materials;
rear weld spots (PA, QA) being made at the edge of at least one of said two rear bearing faces to weld said outer rear assembly block to said inner assembly block; and
front weld spots being made at the edge of at least one of said two front bearing faces to weld said inner front assembly block to said outer front assembly block.

3. A device according to claim 2, characterized by the fact that said component base (EL) is constituted by a thermally conductive base material;
said device further including thermal action means (54) in thermal connection with said component base (EL) to remove heat produced in said component and/or to regulate its temperature;
said base holding means (14) ensuring thermal contact between said component base and said receiver block (DB); and
said thermal action means (54) being disposed in indirect thermal connection with said component base via said receiver block.

4. A device according to claim 3, characterized by the fact that said base material is a better conductor of heat than said assembly material.

5. A device according to claim 2, characterized by the fact that the size of said component base (EL) in said longitudinal direction (Z) is substantially equal to the size of said opto-electronic component (L) in said direction.

6. A device according to claim 2, characterized by the fact that said bearing faces that bear against one another (DAS, BAS) are of substantially the same shapes and sizes, and are in coincidence, each of said weld spots (PA) interconnecting two of said assembly blocks (BA, DA) having two such faces extending over two adjacent edges belonging to respective ones of said two faces.

7. A device according to claim 2, characterized by the fact that said weld spots (PA, QA, PB, QB) are autogenous weld spots constituted by said assembly materials.

8. A device according to claim 7, characterized by the fact that each of said assembly blocks (DA) substantially comprises:
a top face (18) formed between two lateral edges (20, 22) each of which extends along said longitudinal direction (Z) and which are spaced apart from each other along said lateral direction (X);
two lateral faces (24) which extend downwards along said relative vertical direction (Y) from respective ones of said two lateral edges; and
two shoulders (26, 28) projecting from respective ones of said two lateral faces along said transverse direction (X) and at a distance from said two lateral edges;
two of said weld spots welding said block extending over a small portion (30) of said top face in the vicinity of respective ones of said two lateral edges (20); and
two of said weld spots welding said block extending over small portions (32) of respective ones of said two shoulders in such a manner that said weld spots are suitable for being made by pulses of a beam of energetic radiation which always propagates substantially along said relative vertical direction.

9. A device according to claim 2, characterized by the fact that said recess (12) receiving said component base (EL) is formed in at least one (DB) of said two inner assembly blocks (DA, DB), these two blocks being constituted by two separate parts each having two transverse plane middle bearing faces (DAT, DBT) bearing against one another in pairs, middle weld spots (PC, QC) being formed in an edge of at least one of said pairs of middle bearing faces to weld said inner front assembly block to said inner rear assembly block.

10. A device according to claim 2, characterized by the fact that said holding means for holding said component base include at least one screw (14) screwed into said receive block (DB).
